# EUROPÄISCHE PATENTSCHRIFT

(11) **EP 4 115 334 B1**
(45) Veröffentlichungstag und Bekanntmachung des Hinweises auf die Patenterteilung: **22.10.2025**
(21) Anmeldenummer: 21710211.0
(22) Anmeldetag: 02.03.2021
(51) Int. Cl.: G06K 19/077, G06Q 10/08

(54) **VORRICHTUNG ZUM WARENMANAGEMENT**
APPARATUS FOR GOODS MANAGEMENT
APPAREIL DE GESTION DES BIENS

(30) Priorität: 04.03.2020 DE 102020105827
(43) Veröffentlichungstag der Anmeldung: 11.01.2023
(73) Patentinhaber: Seuster KG, 58513 Lüdenscheid (DE)
(72) Erfinder: FISCHER, Jörg, 44269 Dortmund (DE)
(74) Vertreter: Hermann, Felix
(86) Internationale Anmeldenummer: PCT/EP2021/055179
(87) Internationale Veröffentlichungsnummer: WO 2021/175850

(56) Entgegenhaltungen:
- CN-U- 205 536 761
- DE-A1- 102016 119 348
- JP-A- H0 410 499
- US-A1- 2006 022 827
- US-A1- 2006 170 556
- US-A1- 2008 094 178
- US-A1- 2008 284 604
- US-A1- 2012 212 327
- US-A1- 2015 302 379
- US-A1- 2018 070 483
- US-A1- 2018 240 291

## Beschreibung

Die Erfindung betrifft ein Verfahren zum Warenmanagement, bei dem den Waren ein RFID-Tag zugeordnet wird und elektromagnetische Signale zwischen dem RFID-Tag und einer Antennenanordnung ausgetauscht werden.

US 2012/212327 A1 offenbart einen RFID-Lesetunnel, der mindestens ein RFID-Lesegerät umfasst, das an einer Lesezone eines Fördererbands zum Lesen von RFID-Transpondern in der Lesezone installiert ist, wobei das RFID-Lesegerät eine an der Lesezone angebrachte Leseempfangsantenne zum Empfangen von RFID-Signalen aus der Lesezone und eine Auswerteeinheit zum Lesen von RFID-Informationen aus den RFID-Signalen aufweist. Dabei ist eine zusätzliche Empfangsantenne so angebracht, dass RFID-Signale aus der Lesezone nicht von der zusätzlichen Empfangsantenne empfangen werden können. Die Auswerteeinheit erkennt ein fehlerhaftes Auslesen der RFID Informationen und verwirft diese, wenn das zu den RFID-Informationen gehörende RFID-Signal sowohl von der Leseempfangsantenne als auch von der zusätzlichen Empfangsantenne empfangen wird.

US 2008/094178 A1 betrifft den Einsatz von RFID-Technologie zur drahtlosen Identifikation von Objekten. Insbesondere betrifft die Offenbarung ein RFID-System mit mindestens einer Leseeinheit zur Identifikation von Transpondern, die sich in einem räumlichen Erfassungsfeld der Leseeinheit befinden. Um bei geringen Installations- und Betriebskosten für das System dennoch eine besonders zuverlässige Erfassung und fehlerfreie Identifikation der Transponder zu ermöglichen, ist eine Abschirmung vorgesehen, die das Erfassungsfeld begrenzt. Besonders vorteilhaft kann die Offenbarung z. B. in die Fördertechnik im Bereich Produktion und/oder Logistik integriert werden.

US 2015/302379 A1 offenbart, dass ein Lesegerät, das Informationen von einem an einer Ware angebrachten RFID-Tag liest. Das Lesegerät umfasst ein Gehäuse, das eine Öffnung umfasst, die als Eingang/Ausgang der Ware dient, und einen Raum zur Unterbringung der Ware im Inneren. Ferner ist in dem Raum eine Antenne angeordnet. Das Lesegerät hat einen Deckel zum Öffnen und Schließen der Öffnung und beinhaltet ein Lesemodul, das über die Antenne Informationen bezüglich der Ware von dem an jeder im Gehäuse untergebrachten Ware angebrachten RFID-Tag liest sowie ein Ausgabemodul, das die vom Lesemodul gelesenen Informationen ausgibt.

Im Allgemeinen werden Verfahren zum Warenmanagement beispielsweise in Produktionsprozessen eingesetzt, bei denen die Waren im Rahmen eines Produktionsprozesses angeliefert und weiterverarbeitet werden. Bei automatisierten Produktionsprozessen muss der Warenfluss überwacht und gesteuert werden. Dazu wird den Waren ein RFID-Tag zugeordnet, in dem die Waren kennzeichnende Daten und/oder die Bestimmung der Waren kennzeichnende Daten abgelegt sind. Von geeigneten Antennenanordnungen werden diese Daten erfasst, mit einer geeigneten Steuer- und Auswerteeinrichtung ausgewertet und die entsprechenden Waren entsprechend den empfangenen Daten in den Warenfluss eingegliedert.

Entsprechende Verfahren zum Warenmanagement werden auch in Logistikzentren benötigt, in denen angelieferte Waren zur Versendung an Bestimmungsorte gelagert und transportiert werden. Das Warenmanagement in entsprechenden Logistikzentren erfordert ebenfalls die Erfassung von die Art der Waren und den Bestimmungsort für die Waren kennzeichnenden Daten, die in RFID-Tags abgelegt sein können. Diese RFID-Tags können an den Waren selbst oder an Warenträgern, wie etwa Paletten für die Waren, angeordnet sein. Im Verlauf des Warenmanagements werden von der Antennenanordnung üblicherweise Signale abgegeben, welche von den RFID-Tags durch Feldschwächung im kontaktfreien Kurzschluss oder gegenphasige Reflektion moduliert werden. Von der Antennenanordnung können die so modulierten elektromagnetischen Signale empfangen und mit Hilfe einer geeigneten Steuer- und Auswerteeinrichtung ausgewertet werden.

Bei herkömmlichen Verfahren der gerade beschriebenen Art kommt es jedoch in vielen Fällen zu Fehlfunktionen, bei denen die Waren nicht ordnungsgemäß in den Warenfluss eingegliedert werden.

Angesichts dieser Probleme im Stand der Technik liegt der Erfindung die Aufgabe zugrunde, ein Verfahren zum Warenmanagement bereitzustellen, mit dem ein störungsfreier Warenfluss ermöglicht wird, sowie ein entsprechendes System bereitzustellen.

Der Gegenstand der Erfindung ist in Patentanspruch 1 angegeben. Die abhängigen Patentansprüche betreffen vorteilhafte Ausgestaltungen der Erfindung.

Im Sinne dieser Beschreibung wird unter dem Begriff abgeschirmt eine Abschirmung elektromagnetischer Strahlen verstanden, mit der dem Durchtritt elektromagnetischer Strahlen entgegengewirkt wird.

Die Erfindung geht auf die Erkenntnis zurück, dass die bei herkömmlichen Warenmanagementverfahren beobachteten Problemen in erster Linie darauf zurückzuführen sind, dass die von der Antennenanordnung abgegebenen elektromagnetischen Signale von einer Vielzahl von Tags moduliert und in entsprechend modulierter Form von der Antennenanordnung empfangen und ausgewertet werden, was bei der Zuordnung der Signale zu den einzelnen Waren und des auf Grundlage dieser Zuordnung durchgeführten Warenmanagements zu Fehlfunktionen führen kann. Bei erfindungsgemäßen Verfahren erfolgt der Signalaustausch zwischen dem RFID-Tag und dem Antennensystem in einer abgeschirmten Zelle. Die Modulation des von der Antennenanordnung abgegebenen elektromagnetischen Signals, welche von der Antennenanordnung nachgewiesen wird, erfolgt daher durch nur einen in der abgeschirmten Austauschzelle angeordneten RFID-Tag, so dass die diesen RFID-Tag zugeordneten Waren zuverlässig bestimmungsgemäß in einen Warenfluss eingegliedert werden können.

RFID-Tags außerhalb der Austauschzelle empfangen erst gar keine von der in der abgeschirmten Austauschzelle angeordneten Antennenanordnung abgegebenen Signale. Entsprechend werden auch keine von außerhalb der Austauschzelle angeordneten RFID-Tags modulierten Signale von der Antennenanordnung empfangen. Störungen durch Überlagerungen verschiedener Signale kann so zuverlässig entgegengewirkt werden.

Bei einer besonders bevorzugten Ausführungsform erfindungsgemäßer Verfahren ist die Austauschzelle von zumindest bereichsweise elektrisch leitenden Elementen begrenzt, von denen mindestens ein Schließelement zwischen einer den Durchtritt der Waren in die Austauschzelle ermöglichenden Öffnungsstellung und einer den Austritt von elektromagnetischen Strahlen aus der Austauschzelle entgegenwirkenden Schließstellung bewegbar ist, wobei das Schließelement zum Anordnen der Waren in der Austauschzelle in die Öffnungsstellung und zum Zweck des Signalaustauschs zwischen dem RFID-Tag und der in der Austauschzelle angeordneten Antennenanordnung in die Schließstellung bewegt wird.

Das Anordnen der Waren in der Austauschzelle kann bei erfindungsgemäßen Verfahren zum einen dadurch erfolgen, dass die Waren selbst, gegebenenfalls auf einem Warenträger, in die Austauschzelle befördert werden. Bei anderen Ausführungsformen der Erfindung wird die Austauschzelle in den Bereich stationär gelagerter Waren bewegt. Bei beiden Ausführungsformen erfindungsgemäßer Verfahren ist es von wesentlicher Bedeutung, dass die Austauschzelle durch Bewegen des Schließelements in die Öffnungsstellung den Eintritt der Waren in die Austauschzelle ermöglicht und anschließend durch Bewegen des Schließelements in die Schließstellung allseitig abgeschirmt werden kann.

Bei einer besonders bevorzugten Ausführungsform der Erfindung ist vorgesehen, dass die Austauschzelle zwei, vorzugsweise einander gegenüberliegende Seiten der Austauschzelle bildende, Schließelemente aufweist, von denen eines zum Anordnen der Waren in der Austauschzelle in die Öffnungsstellung und das andere zum Entfernen der Waren aus der Austauschzelle in die Öffnungsstellung bewegt wird. Bei dieser Ausführungsform der Erfindung ermöglicht das erfindungsgemäße Verfahren zum Warenmanagement einen Durchlaufbetrieb und somit einen überlagerungsfreien Signalaustausch ohne Verzögerung des Warenflusses. Die Austauschzelle kann bei der Durchführung erfindungsgemäßer Verfahren zwischen zwei oder mehr Austauschstandorten bewegt werden. Zusätzlich oder alternativ können die Waren mit dem zugeordneten RFID-Tag die Austauschzelle durchlaufen.

Wie der vorstehenden Beschreibung erfindungsgemäßer Verfahren zu entnehmen ist, weist eine zum Durchführen eines erfindungsgemäßen Verfahrens geeignete Austauschzelle für das Warenmanagement eine in der Austauschzelle angeordnete Antennenanordnung auf, wobei die Austauschzelle selbst von mindestens einem Element aus zumindest teilweise elektrisch leitfähigem Material, insbesondere metallischem Material, begrenzt ist, mit dem eine Abschirmung des während des Signalaustauschs übertragenen elektromagnetischen Signals möglich ist. Dabei kann mindestens ein Begrenzungselement ein zwischen einer Öffnungsstellung, in der es die Anordnung von Waren in der Austauschzelle ermöglicht, und einer Schließstellung, in der es dem Austritt elektromagnetischer Strahlung aus der Austauschzelle entgegenwirkt, bewegbares Schließelement aufweisen.

Bei einer die Eingliederung einer erfindungsgemäßen Austauschzelle in einen Warenfluss ermöglichenden Ausführungsform der Erfindung weisen mindestens zwei vorzugsweise einander gegenüberliegende Seiten der Austauschzelle Schließelemente auf, von denen jedes zwischen einer Öffnungsstellung und einer Schließstellung bewegbar ist, so dass durch Bewegen des einen Schließelements in die Öffnungsstellung die Anordnung der Waren in der Austauschzelle und durch Bewegen des anderen Schließelements in die Öffnungsstellung das Entfernen der Waren aus der Austauschzelle ermöglicht wird. Während des Signalaustauschs zwischen den den Waren zugeordneten RFID-Tags und der Antennenanordnung befinden sich vorzugsweise beide Schließelemente in der Schließstellung.

Erfindungsgemäß wird eine besonders schnelle Bewegung der Schließelemente zwischen der Schließstellung und der Öffnungsstellung ermöglicht, wenn mindestens ein Schließelement in der Öffnungsstellung einen mehrlagigen Wickel bildet. Weiter erfindungsgemäß wird eine weitere Beschleunigung der Bewegung des Schließelements zwischen der Öffnungsstellung und der Schließstellung dadurch möglich, dass mindestens ein Schließelement einen bahnförmigen Behang aufweist, der auf mindestens einer Seite mit einem metallischen Material beschichtet ist. Fener kann der Behang in der Öffnungsstellung auf einer Wickelwelle aufgewickelt sein, von der es bei einer Schließbewegung abgewickelt wird. Als metallisches Material zur abschirmenden Beschichtung des Schließelements kann beispielsweise Aluminium eingesetzt werden.

Bei dem bahnförmigen Behang kann es sich um ein Bauelement aus einem flexiblen Material wie etwa eine Kunststofffolie handeln, das eine metallische Beschichtung, wie etwa eine Aluminiumbeschichtung aufweist. Ein Behang in Form einer solchen aluminiumbeschichteten Kunststofffolie lässt eine hohe Anzahl von Wicklungen auf einer Welle zu, ohne zu verschleißen. Zudem ist ein entsprechendes Material sehr leicht und kann daher ohne übermäßigen Aufwand mit hoher Geschwindigkeit zwischen Schließstellung und Öffnungsstellung bewegt werden. Es kann ein kleindimensionierter Motor zum Auf- und Abwickeln des Behangs eingesetzt werden, bei gleichzeitiger Realisierung von einer großen Anzahl von Lastspielen, die insbesondere bei einer automatisierten Lösung mit kurzen Taktzeiten von Vorteil ist.

Bei einer besonders bevorzugten Ausführungsform der Erfindung ist der Behang zumindest teilweise aus einem Mineralfasern aufweisenden Flächengebilde, wie etwa einem Glasfaser- bzw. Glasgewebe, mit einer metallischen Beschichtung, wie etwa einer Aluminiumbeschichtung, gebildet. Entsprechende Produkte weisen neben der abschirmenden Wirkung auch noch eine verbesserte Brandschutzwirkung auf. Sie sind kaum brennbar.

Im Rahmen der Erfindung kann mindestens ein Begrenzungselement ein starres Wandelement aufweisen, wobei das starre Wandelement ein Metallblech, insbesondere in Form eines Sektionaltorpaneels, aufweisen kann.

Die erfindungsgemäß vorgesehene Austauschzelle kann auch insgesamt von aluminiumbeschichteten Folien bzw. Geweben begrenzt sein. Es ist auch daran gedacht, starre Begrenzungswände der Austauschzelle mit einem entsprechenden flexiblen Material mit Aluminiumbeschichtung zu bespannen. So kann eine sehr leichte und kostengünstige Konstruktionsform verwirklicht werden, die individuell und einfach in Größe und Form angepasst werden kann. Eine solche Austauschzelle kann sowohl stationär als auch mobil ausgeführt werden.

Insbesondere im Hinblick auf eine gegebenenfalls gewünschte mobile Ausführung der Austauschzelle hat es sich als zweckmäßig erwiesen, wenn die Wandelemente in einen starren, vorzugsweise aus Metallholmen bzw. -profilen gebildeten Rahmen eingefügt sind.

Transportelemente wie etwa Rollen und/oder Räder, auf denen die Austauschzelle zwischen Austauschstandorten bewegbar sein kann, sind erfindungsgemäß an dem Rahmen befestigt. Ein erfindungsgemäßes Warenmanagementsystem umfasst eine erfindungsgemäße Austauschzelle mit darin angeordneter Antennenanordnung und einen mit einem RFID-Tag ausgestatteten Warenträger. Der Warenträger kann als Palette ausgeführt sein. Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. In der Zeichnung zeigt:
- Fig. 1: eine erfindungsgemäße Austauschzelle mit in die Schließstellung bewegtem Schließelement, und
- Fig. 2: eine erfindungsgemäße Austauschzelle mit in die Öffnungsstellung bewegtem Schließelement.

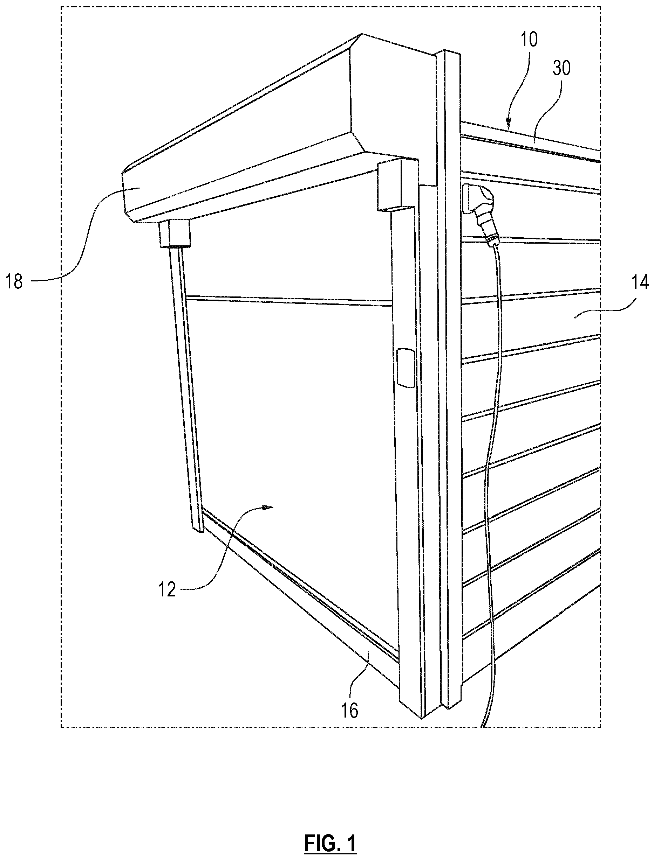

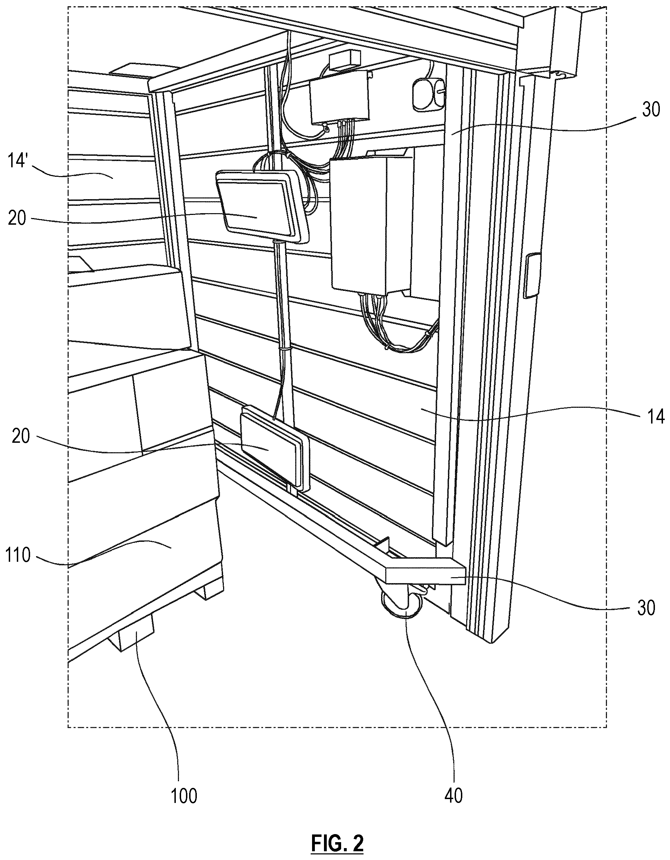

Die in der Zeichnung dargestellte Austauschzelle 10 ist im Wesentlichen quaderförmig ausgeführt und wird dreiseitig von Begrenzungselementen in Form von starren Wänden 14 begrenzt. Die starren Wände 14 weisen Metallbleche auf und sind bei der in der Zeichnung dargestellten Ausführungsform der Erfindung aus Sektionaltorpaneelen ausgeführt. Die verbleibende Seite der Austauschzelle ist bei der in der Zeichnung dargestellten Ausführungsform der Erfindung durch ein Schließelement in Form eines bahnförmigen Behangs 12 ausgeführt, das zwischen der in Fig. 1 dargestellten Schließstellung und der Öffnungsstellung gemäß Fig. 2 bewegbar ist. In der Schließstellung (vgl. Fig.1) liegt ein am unteren Rand des bahnförmigen Schließelements 12 angeordnetes Stabilisierungsprofil 16 auf dem Zellenboden auf. In der Öffnungsstellung (vgl. Fig. 2) ist das als bahnförmiger Behang ausgeführte Schließelement 12 zu einem mehrlagigen Wickel aufgewickelt und in einem Gehäuse 18 oberhalb der in der Schließstellung durch das Schließelement 12 verschlossenen Öffnung der Austauschzelle 10 angeordnet.

Wie bereits in Fig. 1 zu erkennen ist, sind die Begrenzungselemente 14, 16 in einem durch Metallholme 30 gebildeten Rahmen aufgenommen. Der Rahmen bildet die Kanten des die Austauschzelle definierenden Quaders. In der Austauschzelle ist eine Antennenanordnung 20 vorgesehen, die bei der in Fig. 2 dargestellten Ausführungsform der Erfindung zwei Antennen aufweist. Die Antennenanordnung 20 ist zum Aussenden von elektromagnetischen Signalen und zum Empfangen von von einem RFID-Tag modulierten Signalen ausgelegt. Bei der in Fig. 2 dargestellten Ausführungsform der Erfindung sind die Waren 110 auf einer als Warenträger dienenden Palette 100 angeordnet. Der RFID-Tag ist bei dieser Ausführungsform der Erfindung an dem Warenträger 100 angeordnet. Nach dem Signalaustausch zwischen dem RFID-Tag und der Antennenanordnung 20 können die auf dem Warenträger 100 angeordneten Waren 110 wieder aus der Austauschzelle entnommen und in den Warenfluss eingegliedert werden.

Bei der in Fig. 2 dargestellten Ausführungsform der Erfindung ist die Austauschzelle 10 mit Transportrollen 40 ausgestattet, die an unteren Metallholmen 30 des die Begrenzungselemente 12 und 14 aufnehmenden Rahmens angebracht sind. Dadurch wird es ermöglicht, die Austauschzelle 10 insgesamt auf den Rollen 40 zu verfahren.

Der in Fig. 1 erkennbare Behang 12 ist mit Aluminium beschichtet.

Bei den in der Zeichnung dargestellten Ausführungsformen der Erfindung ist nur ein Begrenzungselement der Austauschzelle als Schließelement 12 ausgeführt, das zwischen einer Öffnungsstellung (vgl. Fig. 2) und einer Schließstellung (vgl. Fig. 1) bewegbar ist. Bei einer bevorzugten Ausführungsform der Erfindung sind zwei einander gegenüberliegende Wände der Austauschzelle 10 durch entsprechende Schließelemente ausgeführt. Das bedeutet, dass das in Fig. 2 mit dem Bezugszeichen 14' gekennzeichnete Begrenzungselement durch ein Schließelement, wie etwa einen bahnförmigen Behang, ersetzt wird.

Die Offenbarung ist nicht auf das anhand der Zeichnung erläuterte Ausführungsbeispiel beschränkt. Vielmehr ist es auch möglich, das Schließelement nach Art eines Sektionaltors mit starren Schließelementen auszuführen. Die Antennenanordnung kann mehr als zwei oder auch nur eine Antenne aufweisen. Die als starre Wände ausgeführten Begrenzungselemente können einstückig ausgeführt sein. Von der Bereitstellung eines durch Metallholme 30 gebildeten Rahmens kann abgesehen werden.

## Patentansprüche

1. Gegen elektromagnetische Strahlen abgeschirmte Austauschzelle (10) für das Warenmanagement, umfassend:
eine in der Austauschzelle (10) angeordneten Antennenanordnung (20), die eingerichtet ist, elektromagnetische Signale mit einem RFID-Tag auszutauschen, das an einer in der Austauchzelle (10) angeordneten Ware angebracht ist,
einen starren Rahmen,
starre, die Austauschzelle (10) begrenzende Wandelemente (14) aus zumindest teilweise elektrisch leitfähigem Material, die in den starren Rahmen eingefügt sind, und
mindestens ein Schließelement (12) aus zumindest teilweise elektrisch leitfähigem Material, das zwischen einer Öffnungsstellung, in der das mindestens eine Schließelement (12) die Anordnung von Waren (110) in der Austauschzelle (10) ermöglicht, und einer Schließstellung, in der das mindestens eine Schließelement (12) dem Austritt elektromagnetischer Strahlung aus der Austauschzelle (10) entgegenwirkt, bewegbar ist,
**gekennzeichnet durch**
an dem Rahmen angebrachte Rollen (40), auf denen die Austauschzelle (10) zwischen Austauschstandorten bewegbar ist,
wobei das mindestens eine Schließelement (12) in der Öffnungsstellung einen mehrlagigen Wickel bildet und einen bahnförmigen Behang aufweist, der auf mindestens einer Seite mit einem metallischen Material beschichtet ist.

2. Austauschzelle nach Anspruch 1, **dadurch gekennzeichnet, dass** mindestens zwei Seiten der Austauschzelle (10) Schließelemente (12) aufweisen, von denen jedes zwischen einer Öffnungsstellung und einer Schließstellung bewegbar ist.

3. Austauschzelle nach einem der vorhergehenden Ansprüche, **dadurch gekennzeichnet, dass** der bahnförmige Behang (12) Mineralfasern aufweist.

4. Austauschzelle nach einem der vorhergehenden Ansprüche, **dadurch**
**gekennzeichnet, dass** die starren Wandelemente (14) ein Metallblech aufweisen und/oder mit einem mit einer metallischen Beschichtung ausgestatteten flexiblen Material und/oder einem beschichteten Flächengebilde aus Mineralfasern bespannt sind.

## Claims

1. An electromagnetic radiation shielded exchange cell (10) for goods management, comprising:
an antenna arrangement (20) arranged in the exchange cell (10), which is configured to exchange electromagnetic signals with an RFID tag attached to goods arranged in the exchange cell (10),
a rigid frame,
rigid wall elements (14) of at least partially electrically conductive material delimiting the exchange cell (10), which are inserted into the rigid frame, and
at least one closing element (12) of at least partially electrically conductive material, which is movable between an open position, in which the at least one closing element (12) enables the arrangement of goods (110) in the exchange cell (10), and a closed position, in which the at least one closing element (12) counteracts the exit of electromagnetic radiation from the exchange cell (10),
**characterized by**
rollers (40) attached to the frame, on which the exchange cell (10) is movable between exchange locations,
wherein the at least one closing element (12) in the open position forms a multi-layer coil and has a curtain in sheet form, which is coated on at least one side with a metallic material.

2. The exchange cell according to claim 1, **characterized in that** at least two sides of the exchange cell (10) have closing elements (12), each of which is movable between an open position and a closed position.

3. The exchange cell according to one of the preceding claims, **characterized in that** the curtain (12) in sheet form has mineral fibers.

4. The exchange cell according to one of the preceding claims, **characterized in that** the rigid wall elements (14) have a metal sheet and/or are covered with a flexible material equipped with a metallic coating and/or a coated fabric of mineral fibers.

## Revendications

1. Cellule d'échange (10) blindée contre les rayonnements électromagnétiques pour la gestion de marchandises, comprenant :
un ensemble d'antennes (20) agencé dans la cellule d'échange (10), qui est configuré pour échanger des signaux électromagnétiques avec une étiquette RFID apposée sur une marchandise agencée dans la cellule d'échange (10) ;
un cadre rigide ;
des éléments de paroi rigides (14) délimitant la cellule d'échange (10), constitués d'un matériau au moins partiellement électriquement conducteur, qui sont insérés dans le cadre rigide ; et
au moins un élément de fermeture (12) en matériau au moins partiellement électriquement conducteur, qui est mobile entre une position d'ouverture, dans laquelle l'au moins un élément de fermeture (12) permet le placement de marchandises (110) dans la cellule d'échange (10), et une position de fermeture, dans laquelle l'au moins un élément de fermeture (12) s'oppose à la sortie de rayonnement électromagnétique de la cellule d'échange (10) ;
**caractérisée par** :
des roulettes (40) fixées au cadre, sur lesquelles la cellule d'échange (10) est déplaçable entre des emplacements d'échange ;
l'au moins un élément de fermeture (12) formant un enroulement multicouche en position d'ouverture et présentant un panneau en forme de bande qui est revêtu d'un matériau métallique sur au moins un côté.

2. Cellule d'échange selon la revendication 1, **caractérisée en ce qu'**au moins deux côtés de la cellule d'échange (10) présentent des éléments de fermeture (12), chacun d'eux étant mobile entre une position d'ouverture et une position de fermeture.

3. Cellule d'échange selon l'une des revendications précédentes, **caractérisée en ce que** le panneau en forme de bande (12) comprend des fibres minérales.

4. Cellule d'échange selon l'une des revendications précédentes, **caractérisée en ce que** les éléments de paroi rigides (14) comprennent une tôle métallique et/ou sont recouverts d'un matériau flexible doté d'un revêtement métallique et/ou d'un matériau en feuilles revêtu à base de fibres minérales.
